(19) Europäisches Patentamt / European Patent Office / Office européen des brevets

(11) **EP 4 189 001 B1**

(12) **EUROPEAN PATENT SPECIFICATION**

(45) Date of publication and mention
of the grant of the patent:
**11.03.2026 Bulletin 2026/11**

(21) Application number: **21755391.6**

(22) Date of filing: **28.07.2021**

(51) International Patent Classification (IPC):
*C08K 3/34* (2006.01)       *C08L 23/20* (2025.01)

(52) Cooperative Patent Classification (CPC):
(C-Sets available)
**C08L 23/20; C08K 3/34;** C08K 2201/003;
C08L 2207/062; C08L 2207/066          (Cont.)

(86) International application number:
**PCT/EP2021/071127**

(87) International publication number:
**WO 2022/023408 (03.02.2022 Gazette 2022/05)**

(54) **BUTENE-1 POLYMER COMPOSITIONS HAVING A SHORT CRYSTALLIZATION TIME**

BUTEN-1-POLYMER-ZUSAMMENSETZUNGEN MIT KURZER KRISTALLISATIONSZEIT

COMPOSITIONS DE POLYMÈRE BUTÈNE-1 PRÉSENTANT UNE COURTE DURÉE DE CRISTALLISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2020 EP 20188872**

(43) Date of publication of application:
**07.06.2023 Bulletin 2023/23**

(73) Proprietor: **Basell Poliolefine Italia S.r.l.**
**20121 Milano (IT)**

(72) Inventors:
• **GUERRA, Silvia**
**44122 Ferrara (IT)**
• **MARCHINI, Roberta**
**44122 Ferrara (IT)**
• **SPATARO, Stefano**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**JP-A- 2007 186 563       US-A- 4 746 692**

• **H. NATHANI ET AL: "On the reduced susceptibility to stress whitening behavior of melt intercalated polybutene-clay nanocomposites during tensile straining", ACTA MATERIALIA., vol. 52, no. 11, 1 June 2004 (2004-06-01), GB, pages 3217 - 3227, XP055769663, ISSN: 1359-6454, DOI: 10.1016/ j.actamat.2004.03.021**

(52) Cooperative Patent Classification (CPC): (Cont.)

C-Sets
**C08K 3/34, C08L 23/20;**
**C08L 23/20, C08L 23/0815, C08K 3/34**

**Description**

FIELD OF THE INVENTION

The present disclosure relates to butene-1 polymer compositions with shortened crystallization time.

BACKGROUND OF THE INVENTION

Butene-1 polymers are known in the art and have a wide range of applicability. In particular, butene-1 homopolymers and copolymers with a high degree of crystallinity are generally characterized by good properties in terms of pressure resistance, creep resistance, impact strength and can be used in the manufacture of pipes for replacing the metal pipes.

One of the key requirements for their application in the pipe sector is an excellent combination of flexibility and tensile strength.

Moreover, in order to achieve a high speed in extrusion, in the pipe molding process, which is generally carried out by extrusion, a sufficiently short crystallization time is required.

More generally, a short crystallization time is beneficial in many polymer molding processes in order to achieve a high processing speed.

It is known in the art that the said properties can be influenced by adding nucleating agents. These nucleating agents are normally foreign materials that promote the crystallization of the polymer from the melt (heterogeneous nucleation).

Many nucleating agents displaying the said effect in crystalline polymers have been already found, however, in the field of nucleation of polyolefins, an effective nucleating agent for one polymer may be ineffective even for a closely related polymer, thus making it very difficult to identify the nucleating agents best suited for a specific polymer, in particular for butene-1 polymers, which also crystalize in at least two different crystalline forms.

Moreover, it is to be considered that different applications require different properties.

For instance, in pipe applications a too high flexural rigidity (high flexural modulus) would be a disadvantage, because, as previously said, a certain level of flexibility is desirable.

However, too low flexural modulus values would reduce the long time pressure resistance.

Even a too short crystallization time would be a disadvantage, as it would make it difficult to consistently produce pipes with the desired shape and properties.

Thus there is a continuous effort in the art to find nucleating agents able to provide the optimal balance of mechanical and processing properties, depending upon the kind of polymer used and the desired application.

For instance, according to JP2007186563 a good balance of properties for pipe applications is achieved by adding ethylene bis stearic acid amide and talc to a butene-1 polymer.

It has now been found that a butene-1 polymer composition having a particularly valuable balance of crystallization time, flexural modulus and tensile strength is obtained by adding talc having a defined particle size, in relatively low amounts.

SUMMARY OF THE INVENTION

Thus the present disclosure provides a butene-1 polymer composition comprising:

A) from 97.5% to 99.85% by weight, preferably from 98% to 99.8% by weight, more preferably from 98% to 99.5% by weight, with respect to the total weight of A) and B), of a butene-1 polymer or polymer composition selected from crystalline butene-1 homopolymers and copolymers, or their combinations;

B) from 0.15% to 2.5% by weight, preferably from 0.2% to 2% by weight, more preferably from 0.5% to 2% by weight, with respect to the total weight of A) and B), of talc in form of particles having a volume based (volumetric) particle diameter distribution Dv (0.95) of 45 $\mu$m or lower, preferably of 35 $\mu$m or lower, more preferably of 25 $\mu$m or lower, in particular of 20 $\mu$m or lower, determined by means of laser light diffraction, the lower limit being preferably in all cases of 5 $\mu$m; and, optionally

C) from 0.01% to 2% by weight, preferably from 0.01% to 1% by weight, more preferably from 0.01% to 0.5% by weight, in particular from 0.01% to 0.2% by weight of an ethylene polymer;

the amount of C) being referred to the total weight of A) + B) + C), which amounts to 100%.

DETAILED DESCRIPTION OF THE INVENTION

For "crystalline butene-1 homopolymers and copolymers" it is meant that said homopolymers and copolymers A) show at least one crystallization peak, corresponding to a crystallization temperature $T_c$, when subjected to differential scanning calorimetry (DSC) measurement.

Consequently, also the present butene-1 polymer composition, comprising the components A), B) and optionally C), shows at least one crystallization peak, thus a crystallization temperature $T_c$, when subjected to DSC measurement.

Preferably, the $T_c$ value of the butene-1 polymer component A) is of 75°C or higher, in particular in the range from 75°C to 85°C.

The $T_c$ value of the present butene-1 polymer composition is preferably of 80°C or higher, in particular in the range from 80°C to 90°C.

The $T_c$ value of the present butene-1 polymer composition is preferably at least 2°C higher, in particular from 2°C to 5°C higher than the $T_c$ value of the butene-1 polymer component A).

The said crystallization temperatures are determined after one melting cycle, with a scanning speed of 10°C/minute.

Consequently, due to the fact that the crystallization temperatures are measured in a cooling run carried out after first melting the polymer sample (using DSC as previously said), such crystallization temperatures are attributable to the crystalline form II of the butene-1 polymer.

Should more than one crystallization peak be detected, the temperature of the most intense peak is to be taken as the Tc value for both the butene-1 polymer component A) and the present butene-1 polymer composition.

As previously said, the present butene-1 polymer composition has a short crystallization time.

Preferably it has a crystallization half-time at 90°C of from 90 to 160 seconds, in particular from 100 to 150 seconds.

This determination is made by DSC, by first melting the sample, then rapidly cooling it to the desired temperature (in the present case to 90°C) and measuring the heat flow caused by the crystallization exotherm. The integral of heat transfer is recorded as a function of time until the crystallization is complete, i.e., heat transfer ceases.

The crystallization half-time is the time at which the heat transfer integral reaches half of its final value.

Moreover, the present butene-1 polymer composition has preferably at least one of the following additional features:

- a flexural modulus from 450 to 650 MPa, more preferably from 500 to 600 MPa, measured according to norm ISO 178:2019, 10 days after molding;
- a tensile elastic modulus from 500 to 800 MPa, more preferably from 560 to 750 MPa, measured at 23°C via DMTA analysis according to ISO 6721-4:2019 on 1mm thick compression molded plaque;
- a value of Izod impact resistance at 23°C from 3 to 15 kJ/m$^2$, in particular from 3 to 10 kJ/m$^2$, measured according to ISO180:2000 on compressed plaques according to ISO 8986-2:2009;
- a value of Izod impact resistance at 0°C from 2 to 10 kJ/m$^2$, in particular from 2 to 8 kJ/m$^2$, measured according to ISO180:2000 on compressed plaques according to ISO 8986-2:2009.

The butene-1 homopolymers and copolymers A) are preferably linear polymers that are highly isotactic, having in particular an isotacticity from 90 to 99%, more preferably from 95 to 99%, measured as mmmm pentads/total pentads, using NMR analysis, or as quantity by weight of matter soluble in xylene at 0 °C.

Moreover, the butene-1 homopolymers and copolymers A) have preferably at least one of the following features:

- an X-ray crystallinity of from 50% to 60%;
- a density of from 0.90 to 0.94 g/cm$^3$.

Preferably the butene-1 homopolymers and copolymers A) and the present butene-1 polymer composition, comprising the components A), B) and optionally C), have a melting temperature (melting peak) from 90 to 125 °C, more preferably from 100 to 125 °C, measured with the previously said DSC method during a second heating run, after first melting and cooling, with a scanning speed of 10°C/minute.

Said melting temperatures are attributable to the crystalline form II of the butene-1 polymer.

Also in this case, should more than one melt peak be detected, the temperature of the most intense peak in is to be taken as the melting temperature.

Suitable copolymers of butene-1 are preferably those containing up to 5% by moles of olefinic comonomers, in particular from 0.1% to 5% by moles, more preferably from 0.1% to 3% by moles. The said comonomers are generally selected from ethylene, propylene or R-CH=CH$_2$ olefins where R is a $C_3$-$C_8$ alkyl or cycloalkyl radical (in particular ethylene, propylene or alphaolefins containing from 5 to 8 carbon atoms, like pentene-1, hexene-1, 4-methylpentene-1 and octene-1).

The said homo- and copolymers can be obtained by low-pressure Ziegler-Natta polymerization of butene-1, for example by polymerizing butene-1 (and any comonomers) with catalysts based on $TiCl_3$, or halogenated compounds of titanium (in particular $TiCl_4$) supported on magnesium chloride, and a co-catalyst (in particular alkyl compounds of aluminium). Electron-donor compounds can be added to the said catalyst components to tailor the polymer properties, like molecular weights and isotacticity. Examples of the said electron-donor compounds are the esters of carboxylic acids and alkyl alkoxysilanes.

In particular, the said butene-1 homopolymers and copolymers A) can be prepared by polymerization of the monomers in the presence of a stereospecific catalyst comprising (i) a solid component comprising a Ti compound and an internal electron-donor compound supported on $MgCl_2$; (ii) an alkylaluminum compound and, optionally, (iii) an external electron-donor compound.

Magnesium dichloride in active form is preferably used as a support. It is widely known from the patent literature that magnesium dichloride in active form is particularly suited as a support for Ziegler-Natta catalysts. In particular, USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins, are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component (i) are $TiCl_4$ and $TiCl_3$; furthermore, also Ti-haloalcoholates of formula $Ti(OR)_{n-y} X_y$, where n is the valence of titanium, X is halogen, preferably chlorine, and y is a number between 1 and n, can be used.

The internal electron-donor compound is preferably selected from esters and more preferably from alkyl, cycloalkyl or aryl esters of monocarboxylic acids, for example benzoic acids, or polycarboxylic acids, for example phthalic, succinic or glutaric acids, the said alkyl, cycloalkyl or aryl groups having from 1 to 18 carbon atoms. Examples of the said electron-donor compounds are diisobutyl phthalate, diethylphtahalate, dihexylphthalate, diethyl or diisobutyl 3,3 - dimethyl glutarate. Generally, the internal electron donor compound is used in molar ratio with respect to the $MgCl_2$ of from 0.01 to 1, preferably from 0.05 to 0.5.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum compounds with alkylaluminum halides, alkylaluminum hydrides or alkylaluminum sesquichlorides such as $AlEt_2Cl$ and $Al_2Et_3Cl_3$.

The external donors (iii) are preferably selected among silicon compounds of formula $R_a^1R_d^2Si(OR^3)_c$, where a and b are integer from 0 to 2, c is an integer from 1 to 3 and the sum (a+b+c) is 4; $R^1$, $R^2$, and $R^3$, are alkyl, cycloalkyl or aryl radicals with 1-18 carbon atoms optionally containing heteroatoms. A particularly preferred group of silicon compounds is that in which a is 0, c is 3, b is 1 and $R^2$ is a branched alkyl or cycloalkyl group, optionally containing heteroatoms, and $R^3$ is methyl. Examples of such preferred silicon compounds are cyclohexyltrimethoxysilane, t-butyltrimethoxysilane diisopropyldrimethoxysilane and thexyltrimethoxysilane. The use of thexyltrimethoxysilane is particularly preferred.

The electron donor compound (iii) is used in such an amount to give a molar ratio between the organoaluminum compound and said electron donor compound (iii) of from 0.1 to 500, preferably from 1 to 300 and more preferably from 3 to 100.

In order to make the catalyst particularly suitable for the polymerization step, it is possible to pre-polymerize said catalyst in a pre-polymerization step. Said prepolymerization can be carried out in liquid (slurry or solution) or in the gas-phase, at temperatures generally lower than 100°C, preferably between 20 and 70°C. The prepolymerization step is carried out with small quantities of monomers for the time which is necessary to obtain the polymer in amounts of between 0.5 and 2000g per g of solid catalyst component, preferably between 5 and 500 and, more preferably, between 10 and 100g per g of solid catalyst component.

As disclosed for instance in WO 03/042258, the butene-1 polymers can also be prepared by polymerization in the presence of catalysts obtained by contacting a metallocene compound with an alumoxane.

The polymerization process can be carried out according to known techniques, for example slurry polymerization using as diluent a liquid inert hydrocarbon, or solution polymerization using for example the liquid butene-1 as a reaction medium. Moreover, it may also be possible to carry out the polymerization process in the gas-phase, operating in one or more fluidized or mechanically agitated bed reactors. The polymerization carried out in the liquid butene-1 as a reaction medium is highly preferred.

To control the molecular weights, a molecular weight regulator, in particular hydrogen, is fed to the polymerization environment.

Examples of polymerization catalysts and processes are disclosed in WO99/45043 and WO2004048424.

While there is no particular limitation as to the molecular weight of the butene-1 homopolymers and copolymers A) and of the present butene-1 polymer composition, it is preferred that they (both) have a MIE of from 100 to 0.01, more preferably from 10 to 0.1 g/10 min., where MIE is the melt flow index measured according to ISO 1133-2:2011, at 190 °C/2.16 kg. In particular, when they are to be used in the extrusion devices for the manufacture of pipes, a MIE in the range of from 1 to 0.1 g/10 min. is preferred. High values of MIE can be obtained directly in polymerization or by subsequent chemical treatment (chemical visbreaking) of the polymer component(s).

The chemical visbreaking of the polymer is carried out in the presence of free radical initiators, such as the peroxides. Examples of radical initiators that can be used for this purpose are 2,5-dimethyl-2,5-di (tert-butylperoxide)-hexane and dicumyl-peroxide.

Preferred intrinsic viscosity values for the butene-1 homopolymers and copolymers A) are from 1.5 to 4 dl/g, as measured in decalin at 135 °C.

The molecular weight distribution (MWD) of the butene-1 homopolymers and copolymers A) is not particularly critical, and can generally be comprised in a broad range. However for pipe applications, MWD values equal to higher than 4, in particular equal to or higher than 5 when expressed in terms of $M_w/M_n$ (where $M_w$ is the weight average molecular weight and $M_n$ is the number average molecular weight), measured by GPC analysis, are preferred.

The preferred upper limit of the Mw/Mn values is of 9 in all cases.

$M_w/M_n$ values of greater than 5 are generally considered to amount to a broad MWD.

Butene-1 polymers with a broad MWD can be obtained in several ways. One of the methods consists in using, when (co) polymerizing butene-1, a catalyst intrinsically capable of producing broad MWD polymers. Another possible method is that of mechanically blending butene-1 polymers having different enough molecular weights, using the conventional mixing apparatus.

It is also possible to operate according to a multistep polymerization process, wherein the said butene-1 polymers with different molecular weights are prepared in sequence in two or more reactors with different reaction conditions, such as the concentration of molecular weight regulator fed in each reactor.

The present component B) is a kind of talc characterized by the previously said values of volume based particle diameter distribution.

In addition to the said Dv (0.95) values, the present component B) has preferably at least one of the following volume based particle diameter distribution features:

- Dv (0.99) of 100 $\mu$m or lower, or of 50 $\mu$m of lower, or of 30 $\mu$m or lower, the lower limit being preferably in all cases of 10 $\mu$m;
- Dv (0.90) of 20 $\mu$m or lower, or of 15 $\mu$m of lower, the lower limit being preferably in all cases of 3 $\mu$m;
- Dv (0.50) of 10 $\mu$m or lower, or of 8 $\mu$m or lower, the lower limit being preferably of 2 $\mu$m.
- Dv (0.10) of 5 $\mu$m or lower, or of 4 $\mu$m or lower, the lower limit being preferably of 1 $\mu$m.

For volume based particle diameter, the diameter of an equivalent sphere having the same volume as the subject particle is meant.

Thus the said values of volume based particle diameter distribution mean that the specified volume fraction of particles, for instance 95% by volume for Dv (0.95), have an equivalent diameter of less than the given value.

Such determination is carried out by laser diffraction.

The analytical equipment used is preferably a Malvern Mastersizer instrument.

As well known, talc is a hydrated magnesium silicate.

It is generally reported to have formula $Mg_3Si_4O_{10}(OH)_2$.

In nature it is a mineral mainly or substantially composed of the said hydrated magnesium silicate, optionally associated with other mineral materials, such as chlorite (hydrated magnesium aluminum silicate) and dolomite.

To achieve the said values of particle diameter distribution, talc can be milled with known techniques, for instance with air classified mills, compressed air, steam and impact grinding.

Preferably, component B) is free from chemical additives, in particular from acid acceptors, like stearates, in particular metal stearates, like Zn stearate.

Preferred examples of ethylene polymer C) are high density polyethylene HDPE, preferably having a density from 0.940 to 0.965 g/cm³, linear low density polyethylene LLDPE, preferably having a density from 0.900 to 0.939 g/cm³, both usually obtained by low pressure polymerization, and low density polyethylene LDPE, preferably having a density from 0.917 to 0.935 g/cm³, usually obtained by high pressure polymerization. Generally the said low pressure polymerization is carried out in the presence of Ziegler-Natta catalysts of the same kind as previously described, while the high pressure polymerization is carried out in the presence of radical initiators, such as peroxides

Said HDPE can be a homopolymer of ethylene or a copolymer of ethylene containing one or more olefin comonomers.

Said LLDPE can be a copolymer of ethylene containing one or more olefin comonomers.

The comonomer or comonomers present in said HDPE and LLDPE are generally selected from olefins having formula $CH_2=CHR$ wherein R is an alkyl radical, linear or branched, having from 1 to 10 carbon atoms.

Specific examples are propylene, butene-1, pentene-1, 4-methylpentene-1, hexene-1, octene-1 and decene-1.

The preferred comonomer content in the said HDPE, when present, is of 0.1 - 15% by weight, in particular from 0.5 to 10 % by weight, with respect to the total weight of the HDPE polymer.

The preferred comonomer content in the said LLDPE is of 5 - 20% by weight, in particular from 8 to 15 % by weight, with respect to the total weight of the LLDPE polymer.

Said LDPE can be a homopolymer of ethylene or a copolymer of ethylene containing smaller quantities of comonomers, such as butyl acrylate.

Among the said ethylene polymers C), HDPE is particularly preferred.

Preferably the ethylene polymer C) has a MIF of from 1 to 50 g/10 min. or from 5 to 50 g/10 min., in particular from 10 to 40 g/10 min, where MIF is the melt flow index measured according to ISO 1133-2:2011, at 190 °C/21.6 kg.

Obviously in the present polybutene-1 composition it is also possible to add further additives commonly used in the art, such as stabilizers, antioxidants, anticorrosion agents, processing aids, pigments and both organic and inorganic fillers.

The present polybutene-1 composition can be obtained by blending the components A), B) and optionally C) with blending techniques and apparatuses well known in the art.

Thus, one can use extruders commonly known in the art, including single-screw extruders, traditional and CoKneader (like the Buss), twin corotating screw extruders, mixers (continuous and batch). Such blending apparatuses can be equipped with separate feeding systems for component A), B) and C) respectively. The component B) and optionally the component C) can be added to the polymer mass inside the blending apparatus, in particular the extruder, either in the same feed port or downstream from the point at which A) is fed into the blending apparatus, so that the distance between will allow A) to have reached the form of a melted, homogeneous mass.

Component B) can be fed in form of masterbatch in a polymer carrier, more preferably in a polyolefin carrier, in particular a polybutene carrier of the same kind as the butene-1 polymer component A).

It is preferred to premix components A), B) and optionally C) before the blending step. To carry out the premixing step, any method and apparatus used in the art can be adopted, in particular low speed mixers like single or double shaft paddle conveyors, ribbon blenders, plough mixers.

To obtain the final composition it is also possible to use a static mixing device as SMX® static mixers from Sulzer where the molten streams of the components (A), (B) and (C) are fed into its inlet, and pushed through, using a gear pump, a twin or a single screw extruder.

The processing temperatures during the blending step must be sufficient to bring (and keep) component A) in the molten state, or to keep component A) in the molten state if A) has been already molten when B) and optionally C) are added. Such temperatures preferably range from 100 °C to 230 °C, more preferably from 100 to 220 °C, most preferably from 120 to 210 °C.

As previously mentioned, a preferred use for the present polybutene-1 composition is for making pipes, in particular for carrying water and hot fluids, and pipe joints. In general it can be advantageously used for any application where the improved mechanical and processing properties are desirable.

The practice and advantages of the various embodiments, compositions and methods as provided herein are disclosed below in the following examples. These examples are illustrative only, and are not intended to limit the scope of the invention in any manner whatsoever.

Particle size distribution

Particle size distribution (PSD) was measured by laser diffraction according to ISO 13320:2009.

The equipment used was a Mastersizer ® 2000 with sample dispersion unit, from Malvern UK.

The detection system had the following features:

- Red light: forward scattering, side scattering, back scattering;
- Blue light: wide angle forward and back scattering;
- Light sources: Red light He-Ne Laser; Blue light solid state light source;
- Optical alignment system: Automatic rapid align system with dark field optical reticule;
- Laser system: Class 1 laser product.

PSD determination is based on the optical diffraction principle of the laser monochromatic light scattered through a dispersed particulate sample. The signal is received by a computer interfaced to the instrument, for processing the received signals and turning them into a dimensional physical quantities.

The results are expressed by a PSD report consisting of 106 classes of diameter (virtual sieves) with related cumulative percentages in terms of volume and additional derived parameters.

The measurement data are contaminated by background electrical noise and also by scattering data from dust on the optics and contaminants floating in the dispersant. For this reason it is necessary to make sure that the sample dispersion unit is clean and all traces of impurities and residual material have been removed.

Thus, a background measurement with pure dispersant (solvent) as well as a measurement of the electrical background was made. The total background value obtained was subtracted from the sample measurement to obtain the real sample data.

For the background measurement, 250 cc. of anhydrous n-heptane solvent containing 2 g/l SPAN 80 Pure as antistatic agent were introduced into the sample dispersion unit. Air residual in solvent was removed by ultrasonic treatment (60 seconds) prior to every measurement.

The solvent was then sent to the measurement cell, while stirrer and recycle pump were operating at an output range of 2205 rpm.

Measurement

The sample, kept in suspension in anhydrous n-heptane by stirring, was added directly into the sample unit.

A 2 minutes sample suspension recycling is needed to promote disaggregation of aggregates (if present).

On the monitor it was possible to see the obscuration bar, allowing to reach the optimal volume concentration of sample. The concentration of sample must correspond to obscuration values ranging from 10 % to 30%. This range guarantees a representative and stable result.

The refractive index (RI) was set to:

Particle RI: 1.596;
Dispersant RI: 1.390.

The measurement time was of 4 seconds.

The signals received from the laser equipment were processed. The PSD was then calculated by the software provided with the Mastersizer apparatus.

Crystallization and melting temperature

The crystallization temperature ($T_c$) and the melting temperature values were determined using the following procedure.

Differential scanning calorimetric (DSC) data were obtained using a Perkin Elmer DSC-7 instrument. A weighted sample (5-10 mg) was sealed into aluminum pans and heated at 200°C with a scanning speed corresponding to 10°C/minute. The sample was kept at 200°C for 5 minutes to allow a complete melting of all the crystallites thus cancelling the thermal history of the sample. Successively, by cooling to -20°C with a scanning speed corresponding to 10°C/minute, the peak temperature was taken as crystallization temperature ($T_c$) and the area as the crystallization enthalpy. After standing 5 minutes at -20°C, the sample was heated for the second time to 200°C with a scanning speed corresponding to 10°C/min. In this second heating run, the peak temperature was taken as the melting temperature of the polybutene-1 crystalline form II (TmII) and the area as the melting enthalpy (ΔHfII).

In order to determine the melting temperature of the polybutene-1 crystalline form I (TmI), the sample was melted, kept at 200°C for 5 minutes and then cooled down to 20°C with a cooling rate of 10°C/min. The sample was then stored for 10 days at room temperature. After 10 days the sample was subjected to DSC, it was cooled to -20°C, and then it was heated at 200°C with a scanning speed corresponding to 10°C/min. In this heating run, the first peak temperature coming from the lower temperature side in the thermogram was taken as the melting temperature (TmI).

Crystallization half-time at 90°C

Differential scanning calorimetric (DSC) data were obtained using a Perkin Elmer DSC-7 instrument. A weighted sample (5-10 mg) was sealed into aluminum pans and heated from room temperature to 180°C with a scanning speed corresponding to 10°C/minute.

The sample was kept at 180°C for 5 minutes to allow a complete melting of all the crystallites thus cancelling the thermal history of the sample.

Successively, it was cooled to 90°C with a scanning speed corresponding to 60°C/minute and the heat flow caused by the crystallization exotherm at 90°C was measured. The integral of heat transfer was recorded as a function of time until the crystallization was complete, i.e., heat transfer ceased.

The crystallization half-time is the time at which the heat transfer integral reaches half of its final value.

MIF and MIE

Determined according to ISO 1133-2:2011 at 190°C with the specified load.

Intrinsic viscosity

Determined according to norm ASTM D 2857-16 in tetrahydronaphthalene at 135 °C.

Tensile elastic modulus (MET-DMTA)

Determined at 23°C via Dynamic Mechanical Thermal Analysis (DMTA) according to ISO 6721-4:2019 on 1mm thick compression molded plaque.

Flexural modulus

According to norm ISO 178:2019, measured 10 days after molding.

Izod impact resistance at 23°C and 0°C

Measured according to ISO180:2000 on compressed plaques according to ISO 8986-2:2009.

Comonomer contents

Determined by IR spectroscopy or by NMR.
Particularly for the butene-1 copolymers the amount of comonomer can be calculated from the $^{13}$C-NMR spectra of the copolymers.
An example of analytical procedure is described hereinafter.
The $^{13}$C NMR spectra are acquired on a Bruker AV-600 spectrometer equipped with cryo-probe, operating at 150.91 MHz in the Fourier transform mode at 120°C.
The peak of the $T_{\beta\delta}$ carbon (nomenclature according to C. J. Carman, R. A. Harrington and C. E. Wilkes, Macromolecules, 10, 3, 536 (1977)) is used as internal reference at 37.24 ppm. The samples are dissolved in 1,1,2,2-tetrachloroethane-*d2* at 120°C with a 8 % wt/v concentration. Each spectrum is acquired with a 90° pulse, 15 seconds of delay between pulses and CPD to remove $^1$H-$^{13}$C coupling. About 512 transients are stored in 32K data points using a spectral window of 9000 Hz.
The assignments of the spectra, the evaluation of triad distribution and the composition are made according to Kakugo [M. Kakugo, Y. Naito, K. Mizunuma and T. Miyatake, Macromolecules, 16, 4, 1160 (1982)] and Randall [J. C. Randall, Macromol. Chem Phys., C30, 211 (1989)] using the following:

$$BBB = 100 \ (T_{\beta\beta})/S = I5$$

$$BBE = 100 T_{\beta\delta}/S = I4$$

$$EBE = 100 \ P_{\delta\delta} \ /S = I14$$

$$BEB = 100 \ S_{\beta\beta}/S = I13$$

$$BEE = 100 \ S_{\alpha\delta}/S = I7$$

$$EEE = 100(0.25 \ S_{\gamma\delta} + 0.5 \ S_{\delta\delta})/S = 0.25 \ I9 + 0.5I10$$

Where

$$S = I5 + I4 + I14 + I13 + I7 + 0.25 \ I9 + 0.5I10$$

The total amount of 1 butene and ethylene as molar percent is calculated from triad using the following relations:

$$[E] = EEE+BEE+BEB$$

$$[B] = BBB+BBE+EBE$$

| Area | Chemical Shift | Assignments | Sequence |
|------|----------------|-------------|----------|
| 1 | 40.40-40.14 | $S\alpha\alpha$ | BBBB |
|  | 39.64 | $T\delta\delta$ | EBE |
| 2 | 39-76-39.52 | $S\alpha\alpha$ | BBBE |
| 3 | 39.09 | $S\alpha\alpha$ | EBBE |
| 4 | 37.27 | $T\beta\delta$ | BBE |
| 5 | 35.20-34.88 | $T\beta\beta$ | BBB |
| 6 | 34.88-34.49 | $S\alpha\gamma$ | BBEB+BEBE |
| 7 | 34.49-34.00 | $S\alpha\delta$ | EBEE+BBEE |
| 8 | 30.91 | $S\gamma\gamma$ | BEEB |
| 9 | 30.42 | $S\gamma\delta$ | BEEE |
| 10 | 29.90 | $S\delta\delta$ | EEE |
| 11 | 27.73-26.84 | $S\beta\delta+2B_2$ | BBB+BBE EBEE+BBEE |
| 12 | 26.70 | $2B_2$ | EBE |
| 13 | 24.54-24.24 | $S\beta\beta$ | BEB |
| 14 | 11.22 | $P\delta\delta$ | EBE |
| 15 | 11.05 | $P\beta\delta$ | BBE |
| 16 | 10.81 | $P\beta\beta$ | BBB |

Determination of isotactic pentads content

The $^{13}$C NMR spectra were acquired on a polymer solution (8-12 wt%) in dideuterated 1,1,2,2-tetrachloro-ethane at 120 °C. The $^{13}$C NMR spectra were acquired on a Bruker AV-600 spectrometer operating at 150.91 MHz in the Fourier transform mode at 120 °C equipped with cryo-probe, using a 90° pulse, 15 seconds of delay between pulses and CPD (WALTZ16) to remove $^1$H-$^{13}$C coupling. About 512 transients were stored in 32K data points using a spectral window of 60 ppm (0-60 ppm). The mmmm pentad peak (27.73 ppm) was used as the reference. The assignments were made as described in the literature (Macromolecules 1991, 24, 2334-2340, by Asakura T.).

The percentage value of pentad tacticity (mmmm%) for butene-1 polymers is the percentage of stereoregular pentads (isotactic pentad) as calculated from the relevant pentad signals (peak areas) in the NMR region of branched methylene carbons as:

$$mmmm\% = 100 \, A1/(A1+A2)$$

where A1 is the area between 28.0 and 27.59 ppm;
A2 is the area between 27.59 and 26.52 ppm

Fractions soluble and insoluble in xylene at 0°C (XS-0°C)

2.5 g of the polymer sample are dissolved in 250 ml of xylene at 135°C under agitation. After 30 minutes the solution is allowed to cool to 100°C, still under agitation, and then placed in a water and ice bath to cool down to 0°C. Then, the solution is allowed to settle for 1 hour in the water and ice bath. The precipitate is filtered with filter paper. During the filtering, the flask is left in the water and ice bath so as to keep the flask inner temperature as near to 0°C as possible. Once the filtering is finished, the filtrate temperature is balanced at 25°C, dipping the volumetric flask in a water-flowing bath for about 30 minutes and then, divided in two 50 ml aliquots. The solution aliquots are evaporated in nitrogen flow, and the residue dried under vacuum at 80° C until constant weight is reached. The weight difference in between the two residues must be lower than 3%; otherwise the test has to be repeated. Thus, one calculates the percent by weight of polymer soluble (Xylene Solubles at 0°C = XS 0°C) from the average weight of the residues. The insoluble fraction in o-xylene at 0°C (xylene Insolubles at 0°C = XI%0°C) is:

$$XI\%0°C = 100 - XS\%0°C.$$

## Determination of X-ray crystallinity

The X-ray crystallinity was measured with an X-ray Diffraction Powder Diffractometer using the Cu-K$\alpha$1 radiation with fixed slits and collecting spectra between diffraction angle $2\Theta = 5°$ and $2\Theta = 35°$ with step of 0.1° every 6 seconds.

Measurements were performed on compression molded specimens in the form of disks of about 1.5-2.5 mm of thickness and 2.5-4.0 cm of diameter. These specimens are obtained in a compression molding press at a temperature of 200°C + 5°C without any appreciable applied pressure for 10 minutes, then applying a pressure of about 10 kg/cm$^2$ for about few second and repeating this last operation 3 times.

The diffraction pattern was used to derive all the components necessary for the degree of crystallinity by defining a suitable linear baseline for the whole spectrum and calculating the total area (Ta), expressed in counts/sec·2$\Theta$, between the spectrum profile and the baseline. Then a suitable amorphous profile was defined, along the whole spectrum, that separate, according to the two phase model, the amorphous regions from the crystalline ones. Thus it is possible to calculate the amorphous area (Aa), expressed in counts/sec·2$\Theta$, as the area between the amorphous profile and the baseline; and the crystalline area (Ca), expressed in counts/sec·2$\Theta$, as Ca = Ta- Aa.

The degree of crystallinity of the sample was then calculated according to the formula:

$$\%Cr = 100 \text{ x } Ca / Ta$$

## Mw/Mn determination by GPC

The determination of the means Mn and Mw, and Mw/Mn derived therefrom was carried out using a Waters GPCV 2000 apparatus, which was equipped with a column set of four PLgel Olexis mixed-gel (Polymer Laboratories) and an IR4 infrared detector (PolymerChar). The dimensions of the columns were $300 \times 7.5$ mm and their particle size 13 $\mu$m. The mobile phase used was 1-2-4-trichlorobenzene (TCB) and its flow rate was kept at 1.0 ml/min. All the measurements were carried out at 150°C. Solution concentrations were 0.1 g/dl in TCB and 0.1 g/l of 2,6-diterbuthyl-p-chresole were added to prevent degradation. For GPC calculation, a universal calibration curve was obtained using 10 polystyrene (PS) standard samples supplied by Polymer Laboratories (peak molecular weights ranging from 580 to 8500000). A third order polynomial fit was used for interpolating the experimental data and obtaining the relevant calibration curve. Data acquisition and processing was done using Empower (Waters). The Mark-Houwink relationship was used to determine the molecular weight distribution and the relevant average molecular weights: the $K$ values were $K_{PS} = 1.21 \times 10^{-4}$ dL/g and $K_{PB} = 1.78 \times 10^{-4}$ dL/g for PS and PB respectively, while the Mark-Houwink exponents $\alpha = 0.706$ for PS and $\alpha = 0.725$ for PB were used.

For butene-1/ethylene copolymers, as far as the data evaluation is concerned, it is assumed that the composition is constant in the whole range of molecular weight and the K value of the Mark-Houwink relationship is calculated using a linear combination as reported below:

$$K_{EB} = x_E K_{PE} + x_P K_{PB}$$

where $K_{EB}$ is the constant of the copolymer, $K_{PE}$ (4.06 $\times$ 10$^{-4}$, dL/g) and $K_{PB}$ (1.78 $\times$ 10$^{-4}$ dl/g) are the constants of polyethylene and polybutene and $x_E$ and $x_B$ are the ethylene and the butene-1 weight% content. The Mark-Houwink exponents $\alpha = 0.725$ is used for all the butene-1/ethylene copolymers independently of their composition.

## Density

Determined according to norm ISO 1183-1:2019 at 23°C.

**Examples 1 and 2 and Comparative Example 1**

Materials used in the examples

PB-1:    homopolymer of butene-1 having the features reported in Table 1.

Talc 1:    talc having the volume based particle diameter distribution reported in Table 2, free from additives, sold by Imi Fabi with trademark HM05.

Talc 2:    zinc stearate coated talc for comparison purpose, having the volume based particle diameter distribution reported in Table 2, sold by Imerys with trademark Mistron ZSC.

HDPE:    ethylene polymer having density of 0.954 g/cm$^3$ and MIF of 24 g/10 min.

The said materials are melt-blended in a Leistritz Micro 27 extruder with co-rotating twin screw, 27mm screw diameter segmented, 40:1 L/D ratio, 500 rpm max screw speed.

The main extrusion parameters were:

- Temperature:    200°C;
- Screw speed:    200 rpm;
- Output:    15 kg/h.

The amounts of the components and the properties of the so obtained final compositions are reported in Table 3.

Table 1

|  |  | **PB-1** |
|---|---|---|
| T$_c$ | °C | 80 |
| Tm II | °C | 116.9 |
| Tm I | °C | 128.8 |
| Mw/Mn |  | 6.5 |
| mmm pentads |  | 95.83 |
| X-ray crystallinity | % | 55 |
| Density | g/cm$^3$ | 0.9166 |
| Intrinsic viscosity | dl/g | 2.17 |
| MET at 23°C via DMTA | MPa | 632 |
| Flexural Modulus | MPa | 510 |
| Izod at 23°C | kJ/m$^2$ | 30.4 |
| Izod at 0°C | kJ/m$^2$ | 12.6 |
| MIE | g/10 min. | 0.47 |

Table 2

| Talc |  | Talc 1 | Talc 2 |
|---|---|---|---|
| Dv (0.10) | μm | 3.27 | 3.06 |
| Dv (0.50) | μm | 6.25 | 7.41 |
| Dv (0.90) | μm | 11.70 | 25.01 |
| Dv (0.95) | μm | 13.70 | 59.75 |
| Dv (0.99) | μm | 17.79 | 180.73 |

Table 3

| Example No. | | 1 | 2 | Comp. 1 |
|---|---|---|---|---|
| PB-1 | % wt. | 98.8 | 98.75 | 98.75 |
| Talc 1 | % wt. | 1.2 | 1.2 | - |
| Talc 2 | % wt. | - | - | 1.2 |
| HDPE | % wt. | - | 0.05 | 0.05 |
| **Properties** | | | | |
| $T_c$ | °C | 85.4 | 84.7 | 82.9 |
| Tm II | °C | 116.9 | 118.0 | 116.7 |
| Tm I | °C | 130.7 | 131.7 | 129.8 |
| Crystallization half-time at 90°C | seconds | 120 | 132 | 192 |
| MET at 23°C via DMTA | Mpa | 580 | 650 | 550 |
| Flexural Modulus | Mpa | 590 | 566 | 544 |
| Izod at 23°C | kJ/m$^2$ | 5 | 5.3 | 6.3 |
| Izod at 0°C | kJ/m$^2$ | 3.2 | 3.5 | 3.5 |
| MIE | g/10 min | 0.78 | 0.75 | 0.75 |

**Claims**

1. A butene-1 polymer composition comprising:

    A) from 97.5% to 99.85% by weight, preferably from 98% to 99.8% by weight, more preferably from 98% to 99.5% by weight, with respect to the total weight of A) and B), of a butene-1 polymer or polymer composition selected from crystalline butene-1 homopolymers and copolymers, or their combinations;
    B) from 0.15% to 2.5% by weight, preferably from 0.2% to 2% by weight, more preferably from 0.5% to 2% by weight, with respect to the total weight of A) and B), of talc in form of particles having a volume based particle diameter distribution Dv (0.95) of 45 $\mu$m or lower, preferably of 35 $\mu$m or lower, more preferably of 25 $\mu$m or lower, in particular of 20 $\mu$m or lower, determined by means of laser light diffraction, the lower limit being preferably in all cases of 5 $\mu$m; and, optionally
    C) from 0.01% to 2% by weight, preferably from 0.01% to 1% by weight, more preferably from 0.01% to 0.5% by weight of an ethylene polymer;

    the amount of C) being referred to the total weight of A) + B) + C), which amounts to 100%.

2. The butene-1 polymer composition of claim 1, wherein the talc B) additionally has at least one of the following volume based particle diameter distribution features:

    - Dv (0.99) of 100 $\mu$m or lower, or of 50 $\mu$m of lower, or of 30 $\mu$m or lower, the lower limit being preferably in all cases of 10 $\mu$m;
    - Dv (0.90) of 20 $\mu$m or lower, or of 15 $\mu$m of lower, the lower limit being preferably in all cases of 3 $\mu$m;
    - Dv (0.50) of 10 $\mu$m or lower, or of 8 $\mu$m or lower, the lower limit being preferably of 2 $\mu$m.
    - Dv (0.10) of 5 $\mu$m or lower, or of 4 $\mu$m or lower, the lower limit being preferably of 1 $\mu$m.

3. The butene-1 polymer composition of claim 1 or 2, having a crystallization temperature $T_c$ of 80°C or higher, measured with the DSC method after one melting cycle, with a scanning speed of 10°C/minute.

4. The butene-1 polymer composition of claim 1 or 2, having a melting temperature of from 90 to 125 °C, preferably from 100 to 125 °C, measured with the DSC method during a second heating run, after first melting and cooling, with a scanning speed of 10°C/minute.

5. The butene-1 polymer composition of claim 1 or 2, having MIE of from 100 to 0.01g/10 min., where MIE is the melt flow index measured according to ISO 1133-2:2011, at 190 °C/2.16 kg.

6. The butene-1 polymer composition of claim 1 or 2, having the following additional feature:

   - a crystallization half-time at 90°C of from 90 to 160 seconds, in particular from 100 to 150 seconds.

7. The butene-1 polymer composition of claim 1 or 2, wherein the butene-1 polymer component A) has a crystallization temperature $T_c$ of 75°C or higher, measured with the DSC method after one melting cycle, with a scanning speed of 10°C/minute.

8. The butene-1 polymer composition of claim 1 or 2, wherein the butene-1 homopolymers and copolymers A) have an isotacticity from 90 to 99%, more preferably from 95 to 99%, measured as mmmm pentads/total pentads, using NMR analysis.

9. The butene-1 polymer composition of claim 1 or 2, wherein the ethylene polymer component C) is selected from HDPE, LLDPE, LDPE and mixtures thereof.

10. Manufactured items comprising the polyolefin composition of claim 1 or 2.

11. The manufactured items of claim 10 in form of pipes or pipe joints.


**Patentansprüche**

1. Buten-1-Polymerzusammensetzung, umfassend:

   A) 97,5 Gew.% bis 99,85 Gew.%, vorzugsweise 98 Gew.% bis 99,8 Gew.%, bevorzugter 98 Gew.% bis 99,5 Gew.%, bezogen auf das Gesamtgewicht von A) und B), von einem Buten-1-Polymer oder einer Buten-1-Polymerzusammensetzung ausgewählt aus kristallinen Buten-1-Homopolymeren und -Copolymeren oder deren Kombinationen;
   B) 0,15 Gew.% bis 2,5 Gew.%, vorzugsweise 0,2 Gew.% bis 2 Gew.%, bevorzugter 0,5 Gew.% bis 2 Gew.%, bezogen auf das Gesamtgewicht von A) und B), von Talkum in Form von Partikeln mit einer volumenbasierten Partikeldurchmesserverteilung Dv (0,95) von 45 $\mu$m oder darunter, vorzugsweise 35 $\mu$m oder darunter, bevorzugter 25 $\mu$m oder darunter, insbesondere 20 $\mu$m oder darunter, bestimmt mittels Laserlichtbeugung, wobei die untere Grenze vorzugsweise in allen Fällen 5 $\mu$m ist; und gegebenenfalls
   C) 0,01 Gew.% bis 2 Gew.%, vorzugsweise 0,01 Gew.% bis 1 Gew.%, bevorzugter 0,01 Gew.% bis 0,5 Gew.% eines Ethylenpolymers;

   wobei die Menge von C) sich auf das Gesamtgewicht von A) + B) + C) bezieht, was in der Summe 100 % ergibt.

2. Buten-1-Polymerzusammensetzung nach Anspruch 1, wobei das Talkum B) zusätzlich mindestens eines der folgenden Merkmale der volumenbasierten Partikeldurchmesserverteilung aufweist:

   - Dv (0,99) von 100 $\mu$m oder darunter oder von 50 $\mu$m oder darunter oder von 30 $\mu$m oder darunter, wobei die untere Grenze vorzugsweise in allen Fällen 10 $\mu$m beträgt;
   - Dv (0,90) von 20 $\mu$m oder darunter oder von 15 $\mu$m oder darunter, wobei die untere Grenze vorzugsweise in allen Fällen 3 $\mu$m beträgt;
   - Dv (0,50) von 10 $\mu$m oder darunter oder von 8 $\mu$m oder darunter, wobei die untere Grenze vorzugsweise in allen Fällen 2 $\mu$m beträgt.;
   - Dv (0,10) von 5 $\mu$m oder darunter oder von 4 $\mu$m oder darunter, wobei die untere Grenze vorzugsweise in allen Fällen 1 $\mu$m beträgt.

3. Buten-1-Polymerzusammensetzung nach Anspruch 1 oder 2 mit einer Kristallisationstemperatur Tc von 80 °C oder höher, gemessen nach dem DSC-Verfahren nach einem Schmelzzyklus mit einer Scangeschwindigkeit von 10 °C/Minute.

4. Buten-1-Polymerzusammensetzung nach Anspruch 1 oder 2 mit einer Schmelztemperatur von 90 bis 125 °C, vorzugsweise 100 bis 125 °C, gemessen nach dem DSC-Verfahren während eines zweiten Erhitzungsdurchlaufs, nach erstem Schmelzen und Abkühlen, mit einer Scangeschwindigkeit von 10 °C/Minute.

5. Buten-1-Polymerzusammensetzung nach Anspruch 1 oder 2 mit einem MIE von 100 bis 0,01 g/10 min., wobei MIE der Schmelzfließindex ist, gemessen gemäß ISO 1133-2:2011, bei 190 °C/2,16 kg.

6. Buten-1-Polymerzusammensetzung nach Anspruch 1 oder 2 mit dem folgenden zusätzlichen Merkmal:

   - einer Kristallisationshalbzeit bei 90 °C von 90 bis 160 Sekunden, insbesondere von 100 bis 150 Sekunden.

7. Buten-1-Polymerzusammensetzung nach Anspruch 1 oder 2, wobei die Buten-1-Polymerkomponente A) eine Kristallisationstemperatur Tc von 75 °C oder höher hat, gemessen nach dem DSC-Verfahren nach einem Schmelzzyklus mit einer Scangeschwindigkeit von 10 °C/Minute.

8. Buten-1-Polymerzusammensetzung nach Anspruch 1 oder 2, wobei die Buten-1-Homopolymere und -Copolymere A) eine Isotaktizität von 90 bis 99 %, bevorzugter 95 % bis 99 % haben, gemessen als mmmm Pentaden/Gesamtpentaden unter Verwendung von NMR-Analyse.

9. Buten-1-Polymerzusammensetzung nach Anspruch 1 oder 2, wobei die Ethylenpolymerkomponente C) ausgewählt ist aus HDPE, LLDPE, LDPE und Mischungen davon.

10. Fertigungsartikel, umfassend die Polyolefinzusammensetzung nach den Ansprüchen 1 bis 2.

11. Fertigungsartikel nach Anspruch 10 in Form von Rohren oder Rohrkupplungen.


**Revendications**

1. Composition polymère de butène-1 comprenant :

   A) 97,5 % à 99,85 % en poids, de préférence 98 % à 99,8 % en poids, plus préférablement 98 % à 99,5 % en poids, par rapport au poids total de A) et de B), d'un polymère de butène-1 ou d'une composition polymère de butène-1 choisie parmi les homopolymères et les copolymères cristallins de butène-1 ou leurs combinaisons ;
   B) 0,15 % à 2,5 % en poids, de préférence 0,2 % à 2 % en poids, plus préférablement 0,5 % à 2 % en poids, par rapport au poids total de A) et de B), de talc sous la forme de particules présentant une distribution des diamètres de particule basée sur le volume Dv (0,95) de 45 μm ou moins, de préférence de 35 μm ou moins, plus préférablement de 25 μm ou moins, en particulier de 20 μm ou moins, déterminée au moyen d'une diffraction de lumière laser, la limite inférieure étant de préférence, dans tous les cas, de 5 μm ; et éventuellement
   C) 0,01 % à 2 % en poids, de préférence 0,01 % à 1 % en poids, plus préférablement 0,01 % à 0,5 % en poids d'un polymère d'éthylène ;

   la quantité de C) se rapportant au poids total de A) + B) + C), qui s'élève à 100 %.

2. Composition polymère de butène-1 selon la revendication 1, le talc B) présentant en plus au moins l'une des caractéristiques de distribution des diamètres de particule basée sur le volume suivantes :

   - Dv (0,99) de 100 μm ou moins ou de 50 μm ou moins ou de 30 μm ou moins, la limite inférieure étant de préférence, dans tous les cas, de 10 μm ;
   - Dv (0,90) de 20 μm ou moins ou de 15 μm ou moins, la limite inférieure étant de préférence, dans tous les cas, de 3 μm ;
   - Dv (0,50) de 10 μm ou moins ou de 8 μm ou moins, la limite inférieure étant de préférence de 2 μm ;
   - Dv (0,10) de 5 μm ou moins ou de 4 μm ou moins, la limite inférieure étant de préférence de 1 μm ;

3. Composition polymère de butène-1 selon la revendication 1 ou 2, présentant une température de cristallisation $T_c$ de 80° C ou plus, mesurée par le procédé de calorimétrie à balayage différentiel (DSC) après un cycle de fusion, à une vitesse de balayage de 10° C/minute.

4. Composition polymère de butène-1 selon la revendication 1 ou 2, présentant une température de fusion de 90 à 125° C, de préférence de 100 à 125° C, mesurée par le procédé de DSC pendant un second cycle de chauffage, après première fusion et refroidissement, à une vitesse de balayage de 10° C/minute.

5. Composition polymère de butène-1 selon la revendication 1 ou 2, présentant un MIE de 100 à 0,01 g/10 min, MIE étant l'indice de fluidité à chaud mesuré selon la norme ISO 1133-2:2011, à 190° C/2,16 kg.

6. Composition polymère de butène-1 selon la revendication 1 ou 2, présentant la caractéristique supplémentaire suivante :

   - un demi-temps de cristallisation à 90° C de 90 à 160 secondes, en particulier de 100 à 150 secondes.

7. Composition polymère de butène-1 selon la revendication 1 ou 2, le constituant polymère de butène-1 A) présentant une température de cristallisation $T_c$ de 75° C ou plus, mesurée par le procédé de DSC après un cycle de fusion, à une vitesse de balayage de 10° C/minute.

8. Composition polymère de butène-1 selon la revendication 1 ou 2, les homopolymères et copolymères de butène-1 A) présentant une isotacticité de 90 à 99 %, plus préférablement de 95 à 99 %, mesurée en tant que pentades mmmm/pentades totaux, à l'aide d'une analyse par RMN.

9. Composition polymère de butène-1 selon la revendication 1 ou 2, le constituant polymère d'éthylène C) étant choisi parmi le HDPE, le LLDPE, le LDPE et leurs mélanges.

10. Articles manufacturés comprenant la composition polyoléfinique selon la revendication 1 ou 2.

11. Articles manufacturés selon la revendication 10 sous la forme de tuyaux ou de raccords de tuyaux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007186563 A
- US 4298718 P
- US 4495338 P
- WO 03042258 A
- WO 9945043 A
- WO 2004048424 A

**Non-patent literature cited in the description**

- **C. J. CARMAN** ; **R. A. HARRINGTON** ; **C. E. WILKES**. *Macromolecules*, 1977, vol. 10 (3), 536
- **M. KAKUGO** ; **Y. NAITO** ; **K. MIZUNUMA** ; **T. MIYATAKE**. *Macromolecules*, 1982, vol. 16 (4), 1160
- **J. C. RANDALL**. *Macromol. Chem Phys.*, 1989, vol. 211
- **ASAKURA T.** *Macromolecules*, 1991, vol. 24, 2334-2340